(19) Europäisches Patentamt
European Patent Office
Office européen des brevets

(11) EP 4 700 095 A1

(12) EUROPEAN PATENT APPLICATION
published in accordance with Art. 153(4) EPC

(43) Date of publication:
**25.02.2026 Bulletin 2026/09**

(21) Application number: **23934161.3**

(22) Date of filing: **27.12.2023**

(51) International Patent Classification (IPC):
***C09D 11/322*** *(2014.01)* ***B41J 2/01*** *(2006.01)*
***B41M 5/00*** *(2006.01)*

(52) Cooperative Patent Classification (CPC):
**B41J 2/01; B41M 5/00; C09D 11/322**

(86) International application number:
**PCT/JP2023/046852**

(87) International publication number:
**WO 2024/219021 (24.10.2024 Gazette 2024/43)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **17.04.2023 JP 2023067114**

(71) Applicant: **Sakata INX Corporation**
**Osaka-shi, Osaka 541-0047 (JP)**

(72) Inventors:
- **NAKASHIMA, Okinori**
  **Osaka-shi, Osaka 541-0047 (JP)**
- **MORIYASU, Kazuki**
  **Osaka-shi, Osaka 541-0047 (JP)**
- **UEDA, Eri**
  **Osaka-shi, Osaka 541-0047 (JP)**
- **SANO, Takaaki**
  **Osaka-shi, Osaka 541-0047 (JP)**

(74) Representative: **Müller-Boré & Partner Patentanwälte PartG mbB**
**Friedenheimer Brücke 21**
**80639 München (DE)**

# (54) INK COMPOSITION FOR INK-JET PRINTING

(57) An object is to provide an aqueous ink composition for inkjet printing which contains a resin emulsion, and to stabilize the discharge stability of the ink composition; preferably, to provide an ink composition for inkjet printing which is applicable to high-speed inkjet printing and continuous inkjet printing, and in particular, to provide a white ink composition for inkjet printing having high shielding power. As a solution, provided is an ink composition for inkjet printing including a pigment (A), a water-soluble organic solvent (B), a resin emulsion (C), a surfactant (D), and water (E). The water-soluble organic solvent (B) has two or more hydroxyl groups in the molecule and has an SP value of 12.0 $(cal/cm^3)^{1/2}$ or more at 25°C (298 K); the content of the water-soluble organic solvent (B) is 15.0% to 50.0% by mass; the solid content of the resin emulsion (C) is 0.1% to 10.0% by mass; and the surfactant (D) includes an acetylenic glycol-based surfactant (D-1) and an alcohol ethoxylate-based surfactant (D-2) in certain amounts.

EP 4 700 095 A1

## Description

### Technical Field

The present invention relates to an ink composition for inkjet printing.

### Background Art

Since a print layer formed by inkjet printing is typically a thin film, adding fine resin particles to an ink composition for inkjet printing enhances the film forming property of an ink coating film, increases the drying rate, and suppresses peeling of the print layer. The addition of fine resin particles to the ink composition for inkjet printing also improves the image quality of the print layer.

However, an ink composition for inkjet printing containing fine resin particles may have reduced discharge stability due to inclusion of solid components. Several techniques for improving the discharge stability have been proposed (Patent Literatures 1 and 2). Patent Literatures 1 and 2 disclose ink compositions for inkjet printing in which a monomer formulation of a binder resin constituting the fine resin particles is specified, and a water-soluble organic solvent having a specific SP value is used as an organic solvent.

It has also been reported that the image quality can be improved by incorporating two or more surfactants into an ink composition for inkjet printing (Patent Literatures 3 to 6). Patent Literature 3 discloses a water-based ink composition containing a silicone surfactant and an acetylenic glycol-based surfactant; Patent Literature 4 discloses an ink containing a silicone-based surfactant and a nonionic surfactant; Patent Literature 5 discloses an ink composition containing a specific defoaming agent together with a surfactant, and each of these is described as an ink for inkjet printing which provides high-quality images; and Patent Literature 6 discloses an ink composition containing an acetylenic surfactant and a nonionic surfactant.

### Background Art Literature

### Patent Literature

Patent Literature 1: Japanese Unexamined Patent Application Publication No. 2020-180178
Patent Literature 2: International Publication No. 2020/218287
Patent Literature 3: Japanese Unexamined Patent Application Publication No. 2019-119786
Patent Literature 4: Japanese Unexamined Patent Application Publication No. 2020-50705
Patent Literature 5: Japanese Unexamined Patent Application Publication No. 2012-193268
Patent Literature 6: Japanese Patent No. 7210802

### Summary of Invention

### Problems to Be Solved by the Invention

As described above, although techniques for improving the discharge stability of an ink composition for inkjet printing containing solid components such as fine resin particles have been proposed, sufficient discharge stability is still not always achieved. In particular, when high-speed inkjet printing (in which the ink discharge frequency is increased) is performed or when continuous printing is performed by inkjet printing, the discharge stability may deteriorate, resulting in formation of streaks in solid-printed areas or meandering of linear-printed areas.

Also, a white ink composition for inkjet printing may be used to form a printed coating film for shielding a print underlayer. Here, in particular, when a white ink composition for inkjet printing containing a white pigment is used for continuous printing, the opacity of the printed coating film may decrease and the underlayer may become visible through the film.

Accordingly, the present invention provides an aqueous ink composition for inkjet printing which contains a resin emulsion, and an object of the present invention is to stabilize the discharge stability of the ink composition. A preferable object is to provide an ink composition for inkjet printing which is applicable to high-speed inkjet printing and continuous printing by inkjet printing, and in particular, to provide a white ink composition for inkjet printing having high shielding power.

## Means for Solving the Problems

Specifically, the present invention relates to the following ink composition for inkjet printing.

[1] An ink composition for inkjet printing, including a pigment (A), a water-soluble organic solvent (B), a resin emulsion (C), a surfactant (D), and water (E), wherein:

the water-soluble organic solvent (B) has, in its molecule, two or more hydroxyl groups and has an SP value of 12.0 $(cal/cm^3)^{1/2}$ or more at 25°C (298 K), as calculated by a formula of $\{(\Delta H - RT)/(M/D)\}^{1/2}$ (in the formula, $\Delta H$ represents a latent heat of vaporization (cal/mol), R represents a gas constant (1.99 (cal/K·mol)), T represents a temperature (K), M represents a molecular weight (g/mol), and D represents a density $(g/cm^3)$);
a content of the water-soluble organic solvent (B) is 15.0% to 50.0% by mass;
a solid content of the resin emulsion (C) is 0.1% to 10.0% by mass;
the surfactant (D) includes an acetylenic glycol-based surfactant (D-1) and an alcohol ethoxylate-based surfactant (D-2);
a total content of the acetylenic glycol-based surfactant (D-1) and the alcohol ethoxylate-based surfactant (D-2) is 0.5% to 2.0% by mass; and
a mass content ratio [(D-1)/(D-2)] of the acetylenic glycol-based surfactant (D-1) to the alcohol ethoxylate-based surfactant (D-2) is 0.1 to 10.0.
The present invention also relates, as a preferred embodiment, to the following ink composition for inkjet printing.

[2] The ink composition for inkjet printing according to [1], wherein the pigment (A) is a white pigment.
[3] The ink composition for inkjet printing according to [1] or [2], further including an alkali-soluble resin dissolved in the ink composition for inkjet printing.
[4] The ink composition for inkjet printing according to any one of [1] to [3], wherein the SP value of the water-soluble organic solvent (B) is 16.0 $(cal/cm^3)^{1/2}$ or less.
[5] The ink composition for inkjet printing according to any one of [1] to [4], wherein the mass content ratio [(D-1)/(D-2)] of the acetylenic glycol-based surfactant (D-1) to the alcohol ethoxylate-based surfactant (D-2) is 0.5 to 3.0.

## Effects of the Invention

The ink composition for inkjet printing according to the present invention exhibits, even though containing solid components such as a necessary amount of a resin emulsion, stable inkjet discharge stability, and in particular, exhibits stable discharge stability when continuous printing or high-speed printing is performed. Therefore, according to the ink composition for inkjet printing according to the present invention, high-quality printed matter can be produced. Preferably, even when the ink composition for inkjet printing according to the present invention is a white ink composition for inkjet printing which contains a white pigment, the opacity of the printed coating film is unlikely to decrease during continuous printing.

## Mode for Carrying Out the Invention

[1. Formulation of Ink Composition for Inkjet Printing]

An ink composition for inkjet printing according to the present invention (hereinafter, also referred to simply as "ink composition") contains a pigment (A), a water-soluble organic solvent (B), a resin emulsion (C), a surfactant (D), and water (E), and may further contain other optional components.

[1-1. Pigment (A)]

The pigment (A) contained in the ink composition for inkjet printing according to the present invention is a component added to impart coloring power, shielding power, and the like to the ink composition, and preferably includes a white pigment. Examples of the white pigment include white inorganic pigments such as titanium dioxide, zinc oxide, zinc sulfide, antimony oxide, and zirconium oxide. White pigments having high shielding properties such as titanium dioxide and zinc oxide are preferably used, and titanium dioxide is particularly preferable from the viewpoint of achieving high light-shielding properties. Titanium dioxide that has been conventionally formulated in inkjet inks can be used. For example, titanium dioxide that is obtained by subjecting any type of titanium dioxide such as a rutile type or an anatase type to a surface-coating treatment using a surface-treatment agent with alumina/silica (mass content ratio) of 100/0 to 33.3/66.7, and that has an average particle size of 0.21 to 0.28 μm and an oil absorptivity of 15 to 33, may be used. Note that the oil

absorptivity refers to the oil absorptivity value specified in JIS K 5101.

In the case of a white ink composition containing a white pigment such as titanium dioxide, the advantageous effects of the present invention may be exhibited more effectively. Specifically, when a white ink composition is continuously printed by inkjet printing, the shielding power of the printed coating film for covering the underlayer may decrease (the underlayer may become visible); however, the white ink composition for inkjet printing according to the present invention is unlikely to cause a decrease in shielding power even during continuous printing.

As described above, the pigment (A) preferably includes a white pigment, and the ink composition may contain the white pigment together with another pigment. Furthermore, the pigment (A) may be a pigment other than a white pigment, such as a coloring pigment or a metal powder. Examples of such pigments include, without particular limitation, the following organic and/or inorganic pigments that have been conventionally used in ink compositions.

Examples of other pigments include dye lake pigments, various organic pigments which are azo-based, benzimidazolone-based, phthalocyanine-based, quinacridone-based, anthraquinone-based, dioxazine-based, indigo-based, thioindigo-based, perylene-based, perinone-based, diketopyrrolopyrrole-based, isoindolinone-based, nitro-based, nitroso-based, flavanthrone-based, quinophthalone-based, pyranthrone-based, and indanthrone-based, and various inorganic pigments, and the like.

Examples of yellow pigments include C.I. Pigment Yellow 1, 2, 3, 12, 13, 14, 16, 17, 42, 73, 74, 75, 81, 83, 87, 93, 95, 97, 98, 108, 109, 114, 120, 128, 129, 138, 139, 150, 151, 155, 166, 180, 184, 185, and 213.

Examples of magenta pigments include C.I. Pigment Red 5, 7, 12, 22, 38, 48:1, 48:2, 48:4, 49:1, 53:1, 57, 57:1, 63:1, 101, 102, 112, 122, 123, 144, 146, 149, 168, 177, 178, 179, 180, 184, 185, 190, 202, 209, 224, 242, 254, 255, and 270, and C.I. Pigment Violet 19.

Examples of cyan pigments include C.I. Pigment Blue 1, 2, 3, 15, 15:1, 15:2, 15:3, 15:4, 15:6, 16, 18, 22, 27, 29, and 60.

Examples of black pigments include carbon black (C.I. Pigment Black 7).

The content of the pigment in the ink composition may vary depending on the type of the pigment and the intended degree of tinting or shielding, and is not particularly limited, but is, for example, about 1.0% to 20.0% by mass, preferably about 3.0% to 15.0% by mass, relative to the entire ink composition. In particular, in the case of white pigments such as titanium dioxide, the content may be about 3.0% to 20.0% by mass, preferably about 5.0% to 15.0% by mass. It should be noted that in the case where a colored ink composition is prepared, it is also possible to use another pigment or dye having a different color as a complementary color, or to add another ink composition having a different color.

[1-2. Water-Soluble Organic Solvent (B)]

The water-soluble organic solvent (B) contained in the ink composition for inkjet printing according to the present invention has two or more hydroxyl groups in its molecule and has a specific SP value. The SP value refers to the solubility parameter, and the SP value of the water-soluble organic solvent (B) can be determined by formula 1 below.

[Formula 1] $$\text{SP value (unit: }(\text{cal/cm}^3)^{1/2}) = \{(\Delta H - RT)/(M/D)\}^{1/2}$$

In formula 1, $\Delta H$ represents the latent heat of vaporization (cal/mol) of the water-soluble organic solvent (B); R represents the gas constant and is 1.99 (cal/K·mol); T represents the temperature (in this case, 25°C, i.e., 298 K); M represents the molecular weight (g/mol) of the water-soluble organic solvent (B); and D represents the density (g/$cm^3$) of the water-soluble organic solvent (B). The calculation of the SP value represented by formula 1 is described in detail in "Plastics Materials, 6th Edition" (J.A. Brydson, Butterworth-Heinemann, 1995).

The water-soluble organic solvent (B) has an SP value (25°C) of 12.0 $(cal/cm^3)^{1/2}$ or more at 25°C. Also, the SP value (25°C) of the water-soluble organic solvent (B) is preferably 16.0 $(cal/cm^3)^{1/2}$ or less, more preferably 14.5 $(cal/cm^3)^{1/2}$ or less. Formulating a water-soluble organic solvent having an SP value (25°C) of 12.0 $(cal/cm^3)^{1/2}$ or more together with water makes it easy for the water-soluble organic solvent to uniformly mix in the ink composition; this prevents the solid components (including emulsions) contained in the ink composition from aggregating and thereby enhances the storage stability of the ink composition. On the other hand, a water-soluble organic solvent having an SP value (25°C) of 16.0 $(cal/cm^3)^{1/2}$ or less can maintain the dispersion stability of the pigment.

Examples of the water-soluble organic solvent (B) include diethylene glycol having an SP value (25°C) of 12.2 $(cal/cm^3)^{1/2}$; 1,2-propanediol (also referred to as propylene glycol) having an SP value (25°C) of 12.6 $(cal/cm^3)^{1/2}$; 1,3-propanediol having an SP value (25°C) of 13.3 $(cal/cm^3)^{1/2}$; and glycerin having an SP value (25°C) of 14.9 $(cal/cm^3)^{1/2}$.

The content of the water-soluble organic solvent (B) in the ink composition for inkjet printing is 15.0% by mass or more relative to the entire ink composition, preferably 20.0% by mass or more, more preferably 25.0% by mass or more; and is 50.0% by mass or less, preferably 45.0% by mass or less, more preferably 40.0% by mass or less. The content of the

water-soluble organic solvent (B) in the ink composition for inkjet printing is, relative to the water (E), preferably 30% by mass or more, more preferably 40% by mass or more, and further preferably 50% by mass or more; and is preferably 400% by mass or less, more preferably 200% by mass or less, and further preferably 150% by mass or less.

The ink composition for inkjet printing may include a water-soluble organic solvent other than the water-soluble organic solvent (B). However, the content thereof should be set so as not to impair the advantageous effects of the present invention, and is typically 3% by mass or less relative to the ink composition for inkjet printing.

[1-3. Resin Emulsion (C)]

The resin emulsion contained in the ink composition for inkjet printing according to the present invention is composed of resin particles dispersed as fine particles in the ink composition. The resin emulsion may be a known resin emulsion used in aqueous ink compositions for inkjet printing, and examples include acrylic resin-based emulsions, styrene-acrylic resin-based emulsions, polyester resin-based emulsions, polyurethane resin-based emulsions, polyvinyl acetate resin-based emulsions, polyvinyl chloride resin-based emulsions, polybutadiene resin-based emulsions, and polyolefin resin-based emulsions. The ink composition may contain one kind of the resin emulsion alone or a combination of two or more kinds.

The resin emulsion can enhance the abrasion resistance, the coating film drying property, and anti-cocking property of the ink composition. Furthermore, from the viewpoint of enhancing the coating film drying property included in printed matter formed using the ink composition and the adhesion to a substrate, the resin contained in the resin emulsion preferably has a glass transition temperature of 20°C or less. Note that the glass transition temperature is based on the catalog value provided by the manufacturer; if such data are unavailable, it can be determined by differential scanning calorimetry (DSC), and is typically calculated on the basis of the midpoint of the temperature range in which glass transition occurs.

The volume-average particle size of the resin particles contained in the resin emulsion is not particularly limited, and may be selected appropriately in accordance with the intended purpose. From the viewpoint of enhancing abrasion resistance of printed matter, improving image quality, and enhancing inkjet discharge stability, the volume-average particle size is preferably 10 nm or more, more preferably 20 nm or more; and is preferably 600 nm or less, more preferably 400 nm or less.

The resin emulsion is also commercially available, and examples include, but are not limited to, AQUACER 531 (BYK-Chemie GmbH, polyethylene-based resin emulsion); YODOSOL AD173 (Henkel AG & Co. KGaA, acrylic resin emulsion); NeoRez R-966 (Covestro AG, polyether-based polyurethane resin emulsion); SEPOLSION ES (Sumitomo Seika Chemicals Co., Ltd., polyester-based resin emulsion); ACRIT WEM-031U, WEM-200U, WEM-321, WEM-3000, WEM-202U, and WEM-3008 (Taisei Fine Chemical Co., Ltd., acrylic-urethane resin emulsions); ACRIT UW-550CS, UW-223SX, AKW107, and RKW-500 (Taisei Fine Chemical Co., Ltd., acrylic resin emulsions); LUBRIJET N240 (Lubrizol Corporation, acrylic resin emulsion); SUPERFLEX 150, 210, 420NS, 470, 500M, 620, 650, 740, E2000, E4800, and R5002 (DKS Co. Ltd., urethane resin emulsions); VINYBLAN 1245L (Nissin Chemical Industry Co., Ltd., vinyl acetate-acrylic resin emulsion); VINYBLAN 278, 701FE35, 701FE50, 701FE65, 700, 701, 711, 737, and 747 (Nissin Chemical Industry Co., Ltd., vinyl chloride-acrylic resin emulsions); VINYBLAN 2706 and 2685 (Nissin Chemical Industry Co., Ltd., acrylic resin emulsions); VINYBLAN GV6181 (Nissin Chemical Industry Co., Ltd., vinyl acetate resin emulsion); Mowinyl 743N, 6520, 6600, 6820, 7470, and 7720 (Japan Coating Resin Corporation, acrylic resin emulsions); PRIMAL AC-261P and AC-818 (The Dow Chemical Company, acrylic resin particle emulsions); NeoCryl A1092, A2091, A2092, A639, A655, and A662 (DSM Coating Resin Ltd., styrene-acrylic resin particle emulsions); QE-1042 and KE-1062 (Seiko PMC Corporation, styrene-acrylic resin particle emulsions); JE-1056 (Seiko PMC Corporation, acrylic resin particle emulsion); JONCRYL 7199 and PDX-7630A (BASF SE, styrene-acrylic resin emulsions); CHALINE R170BX (Nissin Chemical Industry Co., Ltd., silicone-acrylic resin emulsion); TAKELAC W-6010 (Mitsui Chemicals, Inc., urethane resin emulsion); ELITEL KA-5071S (Unitika Ltd., polyester resin emulsion); and POLYSOL AP-1350 (SHOWA DENKO K.K., acrylic resin emulsion).

The content of the resin emulsion (C) in the ink composition is 0.1% by mass or more in terms of solid content, preferably 0.3% by mass or more, more preferably 0.5% by mass or more; and is 10.0% by mass or less, preferably 7.0% by mass or less, more preferably 5.0% by mass or less. Maintaining the content of the resin emulsion (C) at or above a certain level (0.1 % by mass or more) improves the image quality of printed matter produced using the ink composition, and also enhances the abrasion resistance. In addition, maintaining the content of the resin emulsion (C) at or below a certain level (10.0% by mass or less) enhances the discharge stability of the ink composition, and also improves the storage stability.

[1-4. Surfactant (D)]

The surfactant contained in the ink composition for inkjet printing according to the present invention includes two

types of surfactants: an acetylenic glycol-based surfactant (D-1) and an alcohol ethoxylate-based surfactant (D-2).

[1-4-1. Acetylenic Glycol-based Surfactant (D-1)]

The acetylenic glycol-based surfactant (D-1) is an acetylenic alcohol or a compound having both an acetylenic bond and a glycol unit, and can be represented by Structural Formula 1 below. The acetylenic bond portion serves as a hydrophobic portion, and the alcohol portion or the glycol portion serves as a hydrophobic portion, thereby exhibiting surfactant activity.

[Chem. 1]

Structural Formula 1

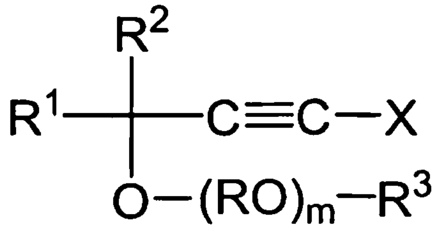

In Structural Formula 1 above, $R^1$ and $R^2$ each independently represent a hydrogen atom or an alkyl group having 1 to 16 carbon atoms; $R^3$ represents a hydrogen atom, an alkyl group having 1 to 6 carbon atoms, or a phenyl group; R represents an alkylene group having 2 to 6 carbon atoms; m represents 0 to 40; and X represents a hydrogen atom or a group represented by Structural Formula 2 below.

[Chem. 2]

Structural Formula 2

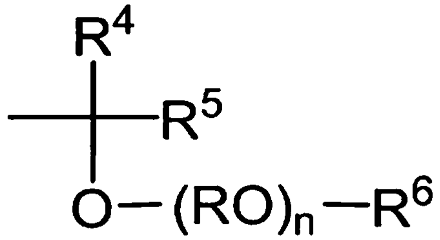

In Structural Formula 2 above, $R^4$ and $R^5$ each independently represent a hydrogen atom or an alkyl group having 1 to 16 carbon atoms; $R^6$ represents a hydrogen atom, an alkyl group having 1 to 6 carbon atoms, or a phenyl group; R represents an alkylene group having 2 to 6 carbon atoms; and n represents 0 to 40.

The acetylenic glycol-based surfactant (D-1) is preferably a surfactant having an acetylenic bond at the center of the molecular structure and a symmetrical molecular structure, and can be represented by either Structural Formula 3 or 4 below.

[Chem. 3]

Structural Formula 3

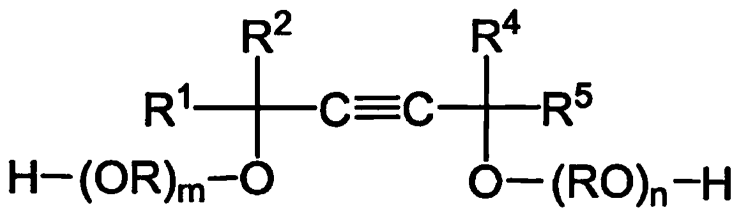

Structural Formula 4

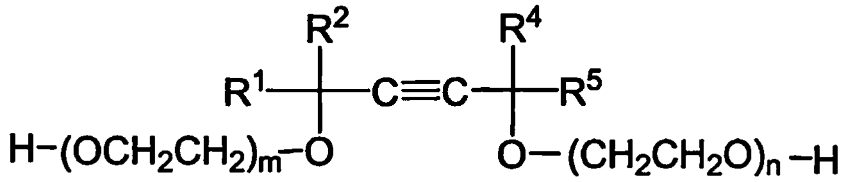

In Structural Formulas 3 and 4 above, $R^1$ to $R^5$, R, m, and n are the same as in Formulas 1 and 2 above; the total of m and n is preferably 1 or more, or more than 1; and is preferably 45 or less, more preferably 40 or less, further preferably 30 or less, still further preferably 20 or less, and even further preferably 15 or less.

Specific examples of the acetylenic glycol-based surfactant (D-1) include acetylenic diols such as 2,4,7,9-tetramethyl-5-decyne-4,7-diol, 3,6-dimethyl-4-octyne-3,6-diol, 3,5-dimethyl-1-hexyn-3-ol, 2,4-dimethyl-5-hexyn-3-ol, 2,5-dimethyl-3-hexyne-2,5-diol, and 2,5,8,11-tetramethyl-6-dodecyne-5,8-diol, and ethylene oxide adducts thereof.

The acetylenic glycol-based surfactant (D-1) is also commercially available under trade names such as SURFYNOL 104E, SURFYNOL 104H, SURFYNOL 104A, SURFYNOL 104BC, SURFYNOL 104DPM, SURFYNOL 104PA, SURFYNOL 104PG-50, SURFYNOL 420, SURFYNOL 440, SURFYNOL 465, SURFYNOL 485, OLFINE E1004, OLFINE E1010, and OLFINE E1020 (Nissin Chemical Industry Co., Ltd.). For example, SURFYNOL 465 is an ethylene oxide adduct of 2,4,7,9-tetramethyl-5-decyne-4,7-diol.

[1-4-2. Alcohol Ethoxylate-based Surfactant (D-2)]

The alcohol ethoxylate-based surfactant (D-2) is a compound in which a polyoxyethylene chain and an alkyl group are bonded via an ether linkage, can be represented by the molecular formula "$R_A$-O-($CH_2CH_2O$)$_d$-H", and may also be referred to as a poly(oxyethylene) alkyl ether. There is no limitation on the number of carbon atoms in the alkyl group ($R_A$) or the average number of moles (d) of ethyleneoxy chains added in the alcohol ethoxylate-based surfactant (D-2). For example, the number of carbon atoms in the alkyl group ($R_A$) is preferably about 11 to 15, more preferably about 12 to 13; and also, the average number of moles (d) of ethyleneoxy chains added is preferably about 3 to 15. The average number of moles of ethyleneoxy groups added is more preferably about 5 to 10.

The alcohol ethoxylate-based surfactant (D-2) preferably has an HLB value of 7 or more, and more preferably has an HLB value of 9 or more. The HLB value is an index indicating the degree of hydrophilicity or lipophilicity of a surfactant, calculated by the Griffin method. A smaller HLB value indicates higher lipophilicity, and a larger HLB value indicates higher hydrophilicity. When the HLB value is equal to or larger than a certain level (7 or more), the compatibility of the alcohol ethoxylate-based surfactant (D-2) in the ink composition is enhanced.

Examples of the alcohol ethoxylate-based surfactant (D-2) include the following: trade names EMULGEN 705, EMULGEN 104, EMULGEN 106, EMULGEN 707, EMULGEN 1108, EMULGEN 1118S-70, EMULGEN 1135S-70, and EMULGEN 1150S-60 (Kao Corporation); trade names ADEKA TOL LA-675B and ADEKA TOL LA-775 (ADEKA Corporation); trade name TRITON (registered trademark) HW1000 (The Dow Chemical Company); and trade name SANNONIC SS70 (Sanyo Chemical Industries, Ltd.).

[1-4-3. Other Surfactants]

The ink composition for inkjet printing according to the present invention may contain a surfactant other than the surfactants (D-1) and (D-2) (other surfactant). Examples of the other surfactant include silicone-based surfactants, alcohol alkoxylate-based surfactants, and anionic surfactants. Preferably, an anionic surfactant is contained.

[1-4-4. Surfactant Content]

The content of each of the surfactants (D-1) and (D-2) in the ink composition according to the present invention is preferably 0.1% by mass to 1.0% by mass. Also, the total content of the surfactants (D-1) and (D-2) in the ink composition is 0.5% by mass or more, preferably 0.7% by mass or more; and is 2.0% by mass or less, preferably 1.5% by mass or less. The total content of the surfactant (D) (the total content of the surfactants (D-1) and (D-2) and the other surfactant) is 0.5% by mass or more, preferably 0.8% by mass or more; and is 3.0% by mass or less, preferably 2.5% by mass or less. If the total content of the surfactant (D) is low, the surface tension of the ink composition increases. This makes it difficult for the ink composition to spread on a base printing material (particularly, a base printing material with low wettability), and as a result, the image quality of the printed matter tends to decrease. Furthermore, the discharge stability of the ink composition during printing also tends to decrease.

The relative content ratio between the surfactants (D-1) and (D-2) in the ink composition may significantly affect the discharge stability of the ink composition (particularly, the discharge stability during continuous printing), and the decrease in the shielding power during continuous printing.

The mass content ratio [(D-1)/(D-2)] of the acetylenic glycol-based surfactant (D-1) to the alcohol ethoxylate-based surfactant (D-2) is 0.1 or more, preferably 0.2 or more; and is 10.0 or less, preferably 5.0 or less. While the acetylenic glycol-based surfactant (D-1) enhances the discharge stability of the ink composition and suppresses a decrease in the shielding power, adjusting the ratio between the surfactants (D-1) and (D-2) with more precision can further improve the discharge stability during continuous printing and make it easier to maintain the shielding power. However, an excessively high content ratio of the acetylenic glycol-based surfactant (D-1) may result in a decrease in the discharge stability of the ink composition, and increase the occurrence of blocking of printed matter; therefore, it is preferable to prevent the blocking by adjusting the mass content ratio [(D-1)/(D-2)].

[1-5. Water]

The ink composition for inkjet printing according to the present invention contains water. The content of water in the ink composition is preferably 40.0% by mass or more, more preferably 50.0% by mass or more; and is preferably 70.0% by mass or less, more preferably 60.0% by mass or less.

[1-6. Other Components]

The ink composition for inkjet printing according to the present invention may contain any optional other components; examples of the other components include additives such as a pigment dispersant, an antifungal agent, a rustproofing agent, a thickening agent, an antioxidant, an UV absorbent, a storability improving agent, an defoaming agent, and a pH-adjusting agent.

In particular, the ink composition for inkjet printing preferably contains a pigment dispersant. The pigment dispersant is preferably a polymer-type pigment dispersant and an alkali-soluble resin. It is also preferable that the alkali-soluble resin be dissolved in the ink composition. In order to dissolve the alkali-soluble resin, the ink composition may contain a basic compound.

The alkali-soluble resin is an alkali-soluble resin that can be used as a pigment dispersant or a binder for ordinary inks and paints, and that can be dissolved in an aqueous medium in the presence of a basic compound. The alkali-soluble resin preferably has an anionic group such as a carboxyl group, a sulfonic acid group, or a phosphonic acid group ($-P(=O)(OH)_2$).

The alkali-soluble resin preferably has an acid value of 100 mgKOH/g or more and 250 mgKOH/g or less. If the acid value is less than 100 mgKOH/g, the solubility of the resin decreases, and the storage stability and continuous discharge stability may be reduced accordingly. Also, an acid value of more than 250 mgKOH/g results in excessively high hydrophilicity, which may reduce storage stability and abrasion resistance. Note that the above acid value is a theoretical acid value, which is arithmetically calculated as the number of milligrams of potassium hydroxide theoretically required to neutralize 1 g of the alkali-soluble resin, on the basis of the formulation of monomers used to synthesize the alkali-soluble resin.

It is preferable that the alkali-soluble resin further have, in molecules thereof, a hydrophobic portion primarily for enhancing the adsorptivity to pigments. Examples of the hydrophobic portion that is to be introduced into the molecules include hydrophobic groups such as long-chain alkyl groups and cyclic hydrocarbon groups of alicyclic or aromatic nature.

The glass transition temperature of the alkali-soluble resin is preferably 0°C or more, more preferably 10°C or more, from the viewpoint of enhancing the anti-blocking property of printed matter. The glass transition temperature of the alkali-soluble resin is preferably 100°C or less, more preferably 80°C or less, from the viewpoint of enhancing the bending tolerance property of printed matter.

In the case where the alkali-soluble resin is an acrylic copolymer resin, the glass transition temperature (Tg) of the alkali-soluble resin is a theoretical glass transition temperature calculated by Wood's equation shown below.

$$\text{Formula:}\quad 1/Tg = W1/Tg1 + W2/Tg2 + W3/Tg3 + \cdots + Wx/Tgx$$

[in the formula, Tg1 to Tgx represent the glass transition temperatures of homopolymers of the respective monomers 1, 2, 3, ..., x that constitute the alkali-soluble resin; W1 to Wx represent the polymerization fractions of the respective monomers 1, 2, 3, ..., x; and Tg represents the theoretical glass transition temperature. Note that the glass transition temperature in Wood's equation is in absolute temperature.]

In the case where the alkali-soluble resin is other than an acrylic copolymer resin, the glass transition temperature of the alkali-soluble resin is a measured glass transition temperature determined by thermal analysis. The thermal analysis

can be conducted in accordance with JIS K 7121 (Testing Methods for Transition Temperatures of Plastics). As one example, the glass transition temperature can be measured using a Pyris 1 DSC manufactured by PerkinElmer under the conditions of a heating rate of 20 °C/min and a nitrogen gas flow rate of 20 milliliters per minute.

The weight-average molecular weight (Mw) of the alkali-soluble resin is preferably 5000 or more, more preferably 10000 or more, from the viewpoint of enhancing the water resistance of printed matter. The weight-average molecular weight of the alkali-soluble resin is preferably 100000 or less, more preferably 50000 or less, from the viewpoint of enhancing the solubility in aqueous media.

The weight-average molecular weight can be measured by gel permeation chromatography (GPC) method. As one example, chromatography can be performed using a Water 2690 (manufactured by Waters Corporation) as the GPC apparatus, PLgel, 5μ, MIXED-D (Polymer Laboratories Inc.) as the column, and tetrahydrofuran as the developing solvent, under the conditions of a column temperature of 25°C, a flow rate of 1 milliliter per minute, an RI detector, a sample injection concentration of 10 milligrams per milliliter, and an injection volume of 100 microliters, and the weight-average molecular weight can be determined in terms of polystyrene equivalence.

Examples of the alkali-soluble resin include acrylic copolymer resins, maleic acid copolymer resins, polyester resins obtained by condensation polymerization reactions, and polyurethane resins. Materials for synthesizing such alkali-soluble resins are disclosed in, for example, Japanese Unexamined Patent Application Publication No. 2000-94825, and acrylic copolymer resins, maleic acid copolymer resins, polyester-based resins, polyurethane-based resins, and the like that are obtained using the materials described in the above publication can be used. Furthermore, resins obtained using materials other than those described above can also be used. The alkali-soluble resin may be used alone or in combination of two or more kinds.

In the case where the ink composition for inkjet printing contains the alkali-soluble resin, it is preferable that the ink composition contain a basic compound used for dissolving the alkali-soluble resin. Examples of the basic compound include inorganic basic compounds such as sodium hydroxide and potassium hydroxide; and organic basic compounds such as ammonia, methylamine, ethylamine, monoethanolamine, N,N-dimethylethanolamine, N,N-diethylethanolamine, N,N-dibutylethanolamine, diethanolamine, N-methyldiethanolamine, triethanolamine, morpholine, N-methylmorpholine, and N-ethylmorpholine. The basic compound may be used alone or in combination of two or more kinds.

The proportion of the basic compound in the aqueous ink composition for inkjet printing according to the present invention may be any amount sufficient to dissolve the alkali-soluble resin in the medium. Typically, from the viewpoint of enhancing the dispersion stability of the alkali-soluble resin, the proportion is preferably 0.05% by mass or more, more preferably 0.1% by mass or more; on the other hand, from the viewpoint of enhancing the water resistance of printed matter, the proportion is preferably 1% by mass or less, more preferably 0.5% by mass or less.

[2. Physical Properties and Preparation of Ink Composition for Inkjet Printing]

The ink composition for inkjet printing preferably has a static surface tension of 27 mN/m or more and 33 mN/m or less as measured at 23°C, and preferably has a dynamic surface tension of 33 mN/m or more and 39 mN/m or less at a lifetime of 10 ms, as measured by the maximum bubble pressure method at 23°C. If the static surface tension is less than 27 mN/m or more than 33 mN/m, the meniscus may become unstable or the ink may be insufficiently supplied at the nozzle surface, which may result in poor discharge stability and poor continuous discharge stability. Similarly, if the dynamic surface tension is less than 33 mN/m or more than 39 mN/m, the meniscus may become unstable or the ink may be insufficiently supplied at the nozzle surface, which may result in poor discharge stability and poor continuous discharge stability.

The viscosity of the ink composition for inkjet printing is preferably 2.0 mPa·s or more, more preferably 3.0 mPa·s or more; and is preferably 15.0 mPa·s or less, more preferably 12.0 mPa·s or less. The viscosity can be measured, for example, using a type-E viscometer (trade name: "RE100L-type viscometer", Toki Sangyo Co., Ltd.).

The method for preparing (producing) the ink composition for inkjet printing is not particularly limited, and may be conducted by sequentially or simultaneously adding and mixing the above components. Examples include (1) a method in which a mixture of an aqueous resin varnish, which is obtained by dissolving an alkali-soluble resin in water in the presence of the basic compound, and a pigment is subjected to dispersion using a dispersing machine (e.g., a ball mill, an attritor, a roll mill, a sand mill, or an agitator mill) to prepare a pigment-dispersed liquid (ink base), and the remaining components (including the water-soluble organic solvent, the resin emulsion, and the surfactant) are further added to prepare the aqueous ink composition for inkjet printing; and (2) a method in which, after preparing a pigment-dispersed liquid (ink base) as in (1), an alkali-soluble resin is deposited on the pigment surface by an acid precipitation method or by ion exchange means as described in International Publication WO2005/116147 to obtain a resin-coated pigment, which is then neutralized with a basic compound and redispersed in water using a dispersing machine (e.g., a high-speed stirrer), and the remaining components (including the water-soluble organic solvent, the resin emulsion, and the surfactant) are further added to prepare the aqueous ink composition for inkjet printing.

[3. Printing Using Ink Composition for Inkjet Printing]

The ink composition for inkjet printing according to the present invention can be used to print on a substrate by an inkjet method. Specifically, the ink composition for inkjet printing can be printed (applied) on a substrate using an inkjet printer. In the inkjet printing method using the ink composition for inkjet printing, conditions known in the art can be appropriately employed; for example, the ink composition for inkjet printing is stored in an ink cartridge, the ink cartridge is mounted in an inkjet recording device employing a single-pass system or the like, and inkjet printing is then performed by jetting the ink from a nozzle onto a substrate.
The ink composition applied to the substrate is fixed on the substrate as a print layer as a result of being dried. The drying means is not particularly limited. Known drying methods include heat drying, hot-air drying, infrared drying, microwave drying, and drum drying. It is preferable to apply the ink composition for inkjet printing such that the film thickness after drying (the thickness of the print layer) is, for example, 1 to 10 μm.
In particular, the ink composition for inkjet printing according to the present invention can effectively maintain discharge stability, which is an advantageous effect of the present invention, during high-speed printing (in which the ink discharge frequency is increased) or continuous printing, thereby achieving high-quality printing. High-speed printing refers to, for example, a printing speed at which 30 or more substrate (A4 portrait) can be printed per minute. Continuous printing refers to, for example, printing 50 or more substrate (A4 portrait) continuously.
Examples of substrate for printing with the ink composition for inkjet printing include coated papers such as art paper, inkjet-specific paper, and inkjet glossy paper; nonabsorbent printing medium such as plastic-based printing medium s, including polypropylene films and polyvinyl chloride sheets; uncoated papers such as plain paper and offset paper; and fabrics such as cotton. In particular, the ink composition for inkjet printing according to the present invention is suitable for nonabsorbent printing medium.
In the case where the ink composition for inkjet printing according to the present invention is a white ink composition, the ink composition may be used for underlayer printing (also referred to as "white undercoating") of substrate. "White undercoating" refers to preliminarily printing a white ink composition on a printing portion of a substrate on which an ink composition of a desired color is to be printed; this makes it possible to shield the substrate used as an underlayer and prevent the color of the printing portion of the substrate from mixing with the desired color. In particular, white undercoating is often performed when a "light-colored ink composition" is to be printed on a substrate.
When a white ink composition containing a white pigment is continuously printed by inkjet printing, the opacity of the printed coating film may gradually decrease. In contrast, the white ink composition for inkjet printing according to the present invention does not exhibit a decrease in the opacity of the printed coating film even when continuous printing is performed. Therefore, as described above, the white ink composition for inkjet printing according to the present invention can be used for white undercoating.
Here, the "opacity" can be measured and calculated using a spectrophotometer eXact (X-Rite, Inc.). Specifically, the tristimulus value of printed matter and the tristimulus value of a reference white paper are measured, and the opacity can be calculated by the following formula 2.

Opacity (%) = "Tristimulus value of the white solid area on the masking paper/Tristimulus value of the high-grade paper × 100" [Formula 2]

In formula 2, the "Tristimulus value of the white solid area on the masking paper" is obtained by printing the white ink composition for inkjet printing on a masking paper by solid white printing with an inkjet printer, such that the film thickness after drying is about 3 μm, measuring the tristimulus value at 5 positions, and calculating the average tristimulus value.
The ink composition for inkjet printing according to the present invention (particularly, the white ink composition) can have the characteristic that the opacity of the printed coating film formed using the ink composition is high, and that the opacity is unlikely to decrease even when continuous printing is performed.

## Examples

The present invention will be described in more detail below with reference to Examples; however, the scope of the present invention should not be construed as being limited by the contents of the Examples. The compounding amounts of the components shown in Tables 1 and 2 are in parts by mass.

<A. Preparation of White Pigment Ink Base (BASE-W)>

First, a white pigment ink base (pigment dispersion) was prepared. The alkali-soluble resin used was a

copolymer of acrylic acid, stearyl acrylate, and styrene, had been neutralized with potassium hydroxide, and had an acid value of 180 mgKOH/g, a glass transition temperature of 50°C, and a weight-average molecular weight Mw of 30000. To 32 parts by mass of the alkali-soluble resin, 28 parts by mass of water were added and mixed to prepare a resin varnish for pigment dispersion. To the varnish, 40.0 parts by mass of a titanium dioxide pigment (trade name: CR-90, manufactured by Ishihara Sangyo Kaisha, Ltd.) were added, followed by stirring and mixing. The resulting mixture was kneaded with a wet circulation mill to obtain an aqueous white pigment ink base (pigment content: 40% by mass).

<B. Preparation of Ink Composition for Inkjet Printing>

An ink composition for inkjet printing was prepared using the white pigment ink base prepared in A. above and the components listed below.

<B-a. Water-Soluble Organic Solvent>

- Propylene glycol: SP value 12.6 $(cal/cm^3)^{1/2}$
- Glycerin: SP value 14.9 $(cal/cm^3)^{1/2}$
- Tripropylene glycol: SP value 11.3 $(cal/cm^3)^{1/2}$
- Butyl carbitol: SP value 9.5 $(cal/cm^3)^{1/2}$

<B-b. Fine resin particles (Resin Emulsion)>

- AQUACER 531 (BYK-Chemie GmbH): Polyethylene-based resin
- YODOSOL AD173 (Henkel AG & Co. KGaA): Acrylic resin
- NeoCryl A-1092 (Covestro AG): Styrene-acrylic resin
- VINYBLAN 1245L (Nissin Chemical Industry Co., Ltd.): Vinyl acetate-acrylic resin
- VINYBLAN 278 (Nissin Chemical Industry Co., Ltd.): Vinyl chloride-acrylic resin
- VINYBLAN GV6181 (Nissin Chemical Industry Co., Ltd.): Vinyl acetate resin
- SUPERFLEX 740 (DKS Co. Ltd.): Polyester-based polyurethane resin
- NeoRez R-966 (Covestro AG): Polyether-based polyurethane resin
- SUPERFLEX 420NS (DKS Co. Ltd.): Polycarbonate-based polyurethane resin
- SEPOLSION ES (Sumitomo Seika Chemicals Co., Ltd.): Polyester-based resin

<B-c. Surfactant>

- SURFYNOL 465 (Nissin Chemical Corporation): Acetylenic glycol-based surfactant
- OLFINE 1004 (Nissin Chemical Corporation): Acetylenic glycol-based surfactant
- EMULGEN 705 (Kao Corporation): Alcohol ethoxylate-based surfactant
- EMULGEN 104 (Kao Corporation): Alcohol ethoxylate-based surfactant
- PERSOFT EF (ADEKA Corporation): Anionic surfactant

<B-d. Procedure for Preparing Ink Composition>

Ink compositions of Examples and Comparative Examples were prepared according to the formulations shown in Tables 1 and 2. Specifically, to the white pigment ink base prepared in A. above, a water-soluble organic solvent, fine resin particles, a surfactant, and water were added, followed by stirring and mixing. In Table 1 and 2, the content of fine resin particles refers to the solid content.

<C. Evaluation of Ink Composition for Inkjet Printing>

Each of the ink compositions obtained in Examples and Comparative Examples was evaluated with respect to the following items.

<C-a. Storage Stability>

Each of the ink compositions was charged into a glass bottle, and the viscosity at 25°C was measured using a viscometer (RE100L model, manufactured by Toki Sangyo Co., Ltd.). Subsequently, the bottle was tightly sealed and stored at 60°C for 1 month. The viscosity (25°C) after storage was measured using the viscometer in the same manner as described above. The temporal stability was evaluated in terms of the viscosity change ratio [(Viscosity after storage - Viscosity before storage)/Viscosity before storage].

Evaluation Criteria

◦: Viscosity change ratio less than 5%
△: Viscosity change ratio of 5% or more and less than 10%
×: Viscosity change ratio of 10% or more and less than 30%

<C-b. Discharge Stability>

Each of the ink compositions was charged into a cartridge of a PX105 printer manufactured by Seiko Epson Corporation, and printing was performed on a masking paper to evaluate the discharge stability.

Evaluation Criteria

◦: No printing irregularities were observed; stable discharge was achieved
△: Some printing irregularities were observed; however, discharge was achieved
×: Printing irregularities were observed; stable discharge was not achieved

<C-c. Continuous Discharge Stability>

Each of the ink compositions was charged into a cartridge of a PX105 printer manufactured by Seiko Epson Corporation, and 50 sheets of a 15 cm × 20 cm solid image (the film thickness after drying was 3 μm) were continuously printed on masking papers to evaluate the continuous discharge stability.

Evaluation Criteria

◦: Image quality was good; stable discharge was achieved
×: Deterioration in image quality, such as streaks, was observed; stable discharge was not achieved

<C-d. Opacity Retention>

In the evaluation described in <C-c. Continuous Discharge Stability>, the opacity (C-1) of the first solid image and the opacity (C-50) of the 50th solid image were determined. The opacities (C-1) and (C-50) were each calculated by Opacity (%) = "Tristimulus value of the white solid area on the masking paper/Tristimulus value of the high-grade paper × 100". The "Tristimulus value of the white solid area on the masking paper" was obtained by measuring the tristimulus value at five positions, and calculating the average tristimulus value. On the basis of the opacities (C-1) and (C-50), the opacity retention was evaluated in accordance with the following criteria.

Evaluation Criteria

◦: [(C-50)/(C-1)] of 0.9 or more and 1 or less
△: [(C-50)/(C-1)] of 0.8 or more and less than 0.9
×: [(C-50)/(C-1)] of less than 0.8

<C-e. Abrasion resistance>

Each of the printed matter samples obtained in <C-c> was dried in an oven at 80°C for 3 minutes, and the printed surface was then rubbed with a cotton swab to evaluate the abrasion resistance.

Evaluation Criteria

◦: No blurriness was observed even after the coating film surface was rubbed 10 times with a cotton swab
△: Slight blurriness was observed on the rubbed area and color was transferred to the cotton swab after the coating film surface was rubbed 10 times with the cotton swab
×: The rubbed area was completely peeled off after the coating film surface was rubbed 10 times with a cotton swab

[Table 1]

| | | Examples | | | | | | | | | | | | | | | |
|---|---|---|---|---|---|---|---|---|---|---|---|---|---|---|---|---|---|
| | | 1 | 2 | 3 | 4 | 5 | 6 | 7 | 8 | 9 | 10 | 11 | 12 | 13 | 14 | 15 | 16 |
| Pigment-dispersed liquid | BASE-W | 25.0 | 25.0 | 25.0 | 25.0 | 25.0 | 25.0 | 25.0 | 25.0 | 25.0 | 25.0 | 25.0 | 25.0 | 25.0 | 25.0 | 25.0 | 25.0 |
| Water-soluble organic solvent | Propylene glycol | 35.0 | - | 35.0 | 35.0 | 35.0 | 35.0 | 35.0 | 35.0 | 35.0 | 35.0 | 35.0 | 35.0 | 35.0 | 35.0 | 35.0 | 35.0 |
| | Glycerin | - | 28.0 | - | - | - | - | - | - | - | - | - | | | | | |
| Fine resin particles (solid) | AQUACER531 | 1.0 | 1.0 | - | - | - | - | - | - | - | - | - | 1.0 | 1.0 | 1.0 | 1.0 | 1.0 |
| | YODOSOL AO173 | - | - | 1.0 | - | - | - | - | - | - | - | - | - | - | - | - | - |
| | NeoCryl A-1092 | - | - | - | 1.0 | - | - | - | - | - | - | - | - | - | - | - | - |
| | VINYBLAN 1245L | - | - | - | - | 1.0 | - | - | - | - | - | - | - | - | - | - | - |
| | VINYBLAN 278 | - | - | - | - | - | 1.0 | - | - | - | - | - | - | - | - | - | - |
| | VINYBLAN GV6181 | - | - | - | - | - | - | 1.0 | | - | - | - | - | - | - | - | - |
| | SUPERFLEX 740 | - | - | - | - | - | - | - | 1.0 | - | - | - | - | - | - | - | - |
| | NeoRez R-966 | - | - | - | - | - | - | - | - | 1.0 | - | - | - | - | - | - | - |
| | SUPERFLEX 420NS | - | - | - | - | - | - | - | - | - | 1.0 | - | - | - | - | - | - |
| | SEPOLSION ES | - | - | - | - | - | - | - | - | - | - | 1.0 | - | - | - | - | - |
| Surfactant | SURFYNOL 465 (D-1) | 0.5 | 0.5 | 0.5 | 0.5 | 0.5 | 0.5 | 0.5 | 0.5 | 0.5 | 0.5 | 0.5 | 0.1 | 1.0 | 0.3 | 0.9 | 0.5 |
| | EMULGEN 705 (D-2) | 0.5 | 0.5 | 0.5 | 0.5 | 0.5 | 0.5 | 0.5 | 0.5 | 0.5 | 0.5 | 0.5 | 1.0 | 0.1 | 0.3 | 0.9 | 0.5 |
| | PERSOFT EF | - | - | - | - | - | - | - | - | - | - | - | - | - | - | - | 0.4 |
| Water | | 38.0 | 45.0 | 38.0 | 38.0 | 38.0 | 38.0 | 38.0 | 38.0 | 38.0 | 38.0 | 38.0 | 37.9 | 37.9 | 38.4 | 37.2 | 37.6 |
| Total | | 100 | 100 | 100 | 100 | 100 | 100 | 100 | 100 | 100 | 100 | 100 | 100 | 100 | 100 | 100 | 100 |
| (D-1) + (D-2) | | 1 | 1 | 1 | 1 | 1 | 1 | 1 | 1 | 1 | 1 | 1 | 1.1 | 1.1 | 0.6 | 1.8 | 1 |
| (D-1) / (D-2) | | 1 | 1 | 1 | 1 | 1 | 1 | 1 | 1 | 1 | 1 | 1 | 0.1 | 10 | 1 | 1 | 1 |
| Evaluation | Storage stability | ○ | ○ | ○ | ○ | ○ | ○ | ○ | ○ | ○ | ○ | ○ | ○ | ○ | ○ | ○ | ○ |
| | Discharge stability | ○ | ○ | ○ | ○ | ○ | ○ | ○ | ○ | ○ | ○ | ○ | ○ | ○ | ○ | ○ | ○ |
| | Continuous discharge stability | ○ | ○ | ○ | ○ | ○ | ○ | ○ | ○ | ○ | ○ | ○ | | | ○ | ○ | ○ |
| | Opacity retention | ○ | ○ | ○ | ○ | ○ | ○ | ○ | ○ | ○ | ○ | ○ | | | ○ | ○ | ○ |
| | Abrasion resistance | ○ | ○ | ○ | ○ | ○ | ○ | ○ | ○ | ○ | ○ | ○ | ○ | ○ | ○ | ○ | ○ |

[Table 2]

| | | Examples | | | | | | Comparative Examples | | | | | | | | | |
|---|---|---|---|---|---|---|---|---|---|---|---|---|---|---|---|---|---|
| | | 17 | 18 | 19 | 20 | 21 | 22 | 1 | 2 | 3 | 4 | 5 | 6 | 7 | 8 | 9 | 10 |
| Pigment-dispersed liquid | BASE-W | 25.0 | 25.0 | 25.0 | 25.0 | 25.0 | 25.0 | 25.0 | 25.0 | 25.0 | 25.0 | 25.0 | 25.0 | 25.0 | 25.0 | 25.0 | 25.0 |
| Water-soluble organic solvent | Propylene glycol | 18.0 | 48.0 | 35.0 | 35.0 | 35.0 | 35.0 | 10.0 | 60.0 | - | - | 35.0 | 35.0 | 35.0 | 35.0 | 35.0 | 35.0 |
| | Tripropylene glycol | | | | | | | - | - | 35.0 | - | - | - | - | - | - | - |
| | Butyl carbitol | | | | | | | - | - | - | 35.0 | - | - | - | - | - | - |
| Fine resin particles (solid) | AQUACER531 | 1.0 | 1.0 | 0.2 | 9.0 | 1.0 | 1.0 | 1.0 | 1.0 | 1.0 | 1.0 | 0.01 | 15.0 | 1.0 | 1.0 | 1.0 | 1.0 |
| Surfactant | SURFYNOL 465 (D-1) | 0.5 | 0.5 | 0.5 | 0.5 | | 0.5 | 0.5 | 0.5 | 0.5 | 0.5 | 0.5 | 0.5 | 2.0 | 0.1 | 0.1 | 1.5 |
| | OLFINE 1004 (D-1) | | | | | 0.5 | | | | | | | | | | | |
| | EMULGEN 705 (D-2) | 0.5 | 0.5 | 0.5 | 0.5 | 0.5 | | 0.5 | 0.5 | 0.5 | 0.5 | 0.5 | 0.5 | 2.0 | 0.1 | 1.5 | 0.1 |
| | EMULGEN 104 (D-2) | | | | | | 0.5 | | | | | | | | | | |
| Water | | 55.0 | 25.0 | 38.8 | 30.0 | 38.0 | 38.0 | 63.0 | 13.0 | 38.0 | 38.0 | 38.99 | 24.0 | 35.0 | 38.8 | 37.4 | 37.4 |
| Total | | 100 | 100 | 100 | 100 | 100 | 100 | 100 | 100 | 100 | 100 | 100 | 100 | 100 | 100 | 100 | 100 |
| (D-1) + (D-2) | | 1 | 1 | 1 | 1 | 1 | 1 | 1 | 1 | 1 | 1 | 1 | 1 | 4 | 0.2 | 1.6 | 1.6 |
| (D-1) / (D-2) | | 1 | 1 | 1 | 1 | 1 | 1 | 1 | 1 | 1 | 1 | 1 | 1 | 1 | 1 | 0.07 | 15 |

(continued)

| | | Examples | | | | | | Comparative Examples | | | | | | | | | |
|---|---|---|---|---|---|---|---|---|---|---|---|---|---|---|---|---|---|
| | | 17 | 18 | 19 | 20 | 21 | 22 | 1 | 2 | 3 | 4 | 5 | 6 | 7 | 8 | 9 | 10 |
| Evaluation | Storage stability | ○ | △ | ○ | ○ | ○ | ○ | ○ | ○ | × | × | ○ | × | × | ○ | ○ | ○ |
| | Discharge stability | ○ | ○ | ○ | △ | ○ | ○ | × | △ | ○ | × | ○ | × | △ | △ | ○ | ○ |
| | Continuous discharge stability | △ | ○ | ○ | △ | ○ | ○ | × | × | ○ | × | ○ | × | × | × | × | × |
| | Opacity retention | △ | ○ | ○ | ○ | ○ | ○ | × | × | ○ | × | ○ | × | × | × | × | × |
| | Abrasion resistance | ○ | ○ | △ | ○ | ○ | ○ | ○ | ○ | ○ | ○ | × | ○ | ○ | ○ | ○ | ○ |

As shown in Comparative Example 1 in Table 2, the white ink composition containing 10.0% by mass of propylene glycol (12.6 $(cal/cm^3)^{1/2}$) exhibited poor discharge stability and a significant decrease in opacity during continuous printing. On the other hand, as shown in Comparative Example 2 in Table 2, the ink composition containing 60.0% by mass of propylene glycol (12.6 $(cal/cm^3)^{1/2}$) also exhibited deteriorated discharge stability and a significant decrease in opacity during continuous printing. The ink composition of Example 17 in Table 2, containing 18.0% by mass of propylene glycol, and that of Example 18 in Table 2, containing 48.0% by mass of propylene glycol, both exhibited practically acceptable performance; however, in Example 17, the continuous discharge stability and opacity retention were slightly inferior, whereas in Example 18, the storage stability was slightly inferior. In contrast, in the examples where the content of propylene glycol was 35% by mass, good discharge stability was exhibited and no decrease in opacity was observed.

As shown in Comparative Examples 3 and 4 in Table 2, the ink compositions using tripropylene glycol (Comparative Example 3) or butyl carbitol (Comparative Example 4) as a solvent exhibited poor storage stability; in addition, the ink composition using butyl carbitol (Comparative Example 4) exhibited deteriorated discharge stability and a significant decrease in opacity during continuous printing.

As shown in Comparative Example 5 in Table 2, the ink composition containing 0.01% by mass of solid content of fine resin particles exhibited insufficient abrasion resistance of the printed matter. On the other hand, as shown in Comparative Example 6 in Table 2, the ink composition containing 15% by mass of solid content of fine resin particles exhibited poor storage stability; in addition, the discharge stability was deteriorated and a significant decrease in opacity was observed during continuous printing. Also, the ink composition of Example 19 in Table 2, containing 0.2% by mass of solid content of fine resin particles, and that of Example 20 in Table 2, containing 9.0% by mass of solid content of fine resin particles, both exhibited practically acceptable performance; however, in Example 19, the abrasion resistance was slightly inferior, whereas in Example 20, the discharge stability and continuous discharge stability were slightly inferior. In contrast, in the examples where the solid content of fine resin particles was 1.0% by mass, good results were obtained in all evaluation items.

As shown in Comparative Example 7 in Table 2, the ink composition in which the total content of the surfactants (D-1) and (D-2) was 4% by mass exhibited poor storage stability; in addition, a decrease in discharge stability (particularly, the discharge stability during continuous printing) was observed, and a significant decrease in opacity was observed during continuous printing. On the other hand, as shown in Comparative Example 8 in Table 2, the ink composition in which the total content of the surfactants (D-1) and (D-2) was 0.2% by mass exhibited deteriorated discharge stability (particularly, the discharge stability during continuous printing) and a significant decrease in opacity during continuous printing. These results indicate that the total content of the surfactants (D-1) and (D-2) is important for suppressing decreases in discharge stability and opacity.

As shown in Comparative Examples 9 and 10 in Table 2, the ink composition in which the content of the surfactant (D-1) was about 0.07 times the content of the surfactant (D-2) (Comparative Example 9), and the ink composition in which the content of the surfactant (D-1) was 15 times the content of the surfactant (D-2) (Comparative Example 10), both exhibited deteriorated discharge stability during continuous printing and a significant decrease in opacity during continuous printing. These results indicate that the content ratio between the surfactants (D-1) and (D-2) is important for suppressing decreases in discharge stability and opacity.

As shown in Tables 1 and 2, the ink compositions of the examples exhibited sufficient results in all evaluation items. However, as shown in Examples 12 and 13, the ink composition in which the content of the surfactant (D-1) was about 0.1 times the content of the surfactant (D-2) (Example 12), and the ink composition in which the content of the surfactant (D-1) was 10 times the content of the surfactant (D-2) (Example 13), both exhibited slightly deteriorated discharge stability during continuous printing and a decrease in opacity during continuous printing. These results indicate that the content ratio between the surfactants (D-1) and (D-2) is important for suppressing decreases in discharge stability and opacity.

As also shown by the comparison between Example 1 and Example 21, the evaluation results were sufficiently good regardless of whether the acetylenic glycol-based surfactant (D-1) was SURFYNOL 465 (Example 1) or OLFINE 1004 (Example 21). Similarly, as shown by the comparison between Example 1 and Example 22, the evaluation results were sufficiently good regardless of whether the alcohol ethoxylate-based surfactant (D-2) was EMULGEN 705 or EMULGEN 104. These results indicate that, by using the acetylenic glycol-based surfactant (D-1) and the alcohol ethoxylate-based surfactant (D-2) in combination, each respective valuation, in particular, discharge stability during continuous printing and suppression of decrease in opacity during continuous printing can be achieved.

## Industrial Field of Application

The ink composition according to the present invention can be printed by inkjet printing, and printed matter having high abrasion resistance can be obtained. Moreover, because the discharge stability in inkjet printing, particularly the discharge stability during continuous printing, is good, the ink composition is applicable to a wide range of uses as an ink composition for inkjet printing. In particular, the ink composition according to the present invention is suitable as a white ink

composition, and can be used as a white ink composition that does not undergo a decrease in shielding power even when continuous printing is performed, such as a white ink composition for inkjet printing for underlayer printing.

## Claims

**1.** An ink composition for inkjet printing, comprising a pigment (A), a water-soluble organic solvent (B), a resin emulsion (C), a surfactant (D), and water (E), wherein:

the water-soluble organic solvent (B) has, in its molecule, two or more hydroxyl groups and has an SP value of 12.0 $(cal/cm^3)^{1/2}$ or more at 25°C (298 K), as calculated by a formula of $\{(\Delta H - RT)/(M/D)\}^{1/2}$ (in the formula, ΔH represents a latent heat of vaporization (cal/mol), R represents a gas constant (1.99 (cal/K·mol)), T represents a temperature (K), M represents a molecular weight (g/mol), and D represents a density $(g/cm^3)$);
a content of the water-soluble organic solvent (B) is 15.0% to 50.0% by mass;
a solid content of the resin emulsion (C) is 0.1% to 10.0% by mass;
the surfactant (D) includes an acetylenic glycol-based surfactant (D-1) and an alcohol ethoxylate-based surfactant (D-2);
a total content of the acetylenic glycol-based surfactant (D-1) and the alcohol ethoxylate-based surfactant (D-2) is 0.5% to 2.0% by mass; and
a mass content ratio [(D-1)/(D-2)] of the acetylenic glycol-based surfactant (D-1) to the alcohol ethoxylate-based surfactant (D-2) is 0.1 to 10.0.

**2.** The ink composition for inkjet printing according to Claim 1, wherein the pigment (A) is a white pigment.

**3.** The ink composition for inkjet printing according to Claim 1 or 2, further comprising an alkali-soluble resin dissolved in the ink composition for inkjet printing.

**4.** The ink composition for inkjet printing according to Claim 1 or 2, wherein the SP value of the water-soluble organic solvent (B) is 16.0 $(cal/cm^3)^{1/2}$ or less.

**5.** The ink composition for inkjet printing according to Claim 1 or 2, wherein the mass content ratio [(D-1)/(D-2)] of the acetylenic glycol-based surfactant (D-1) to the alcohol ethoxylate-based surfactant (D-2) is 0.5 to 3.0.

## INTERNATIONAL SEARCH REPORT

International application No.
**PCT/JP2023/046852**

**A. CLASSIFICATION OF SUBJECT MATTER**

***C09D 11/322***(2014.01)i; ***B41J 2/01***(2006.01)i; ***B41M 5/00***(2006.01)i
FI: C09D11/322; B41M5/00 120; B41J2/01 501

According to International Patent Classification (IPC) or to both national classification and IPC

**B. FIELDS SEARCHED**

Minimum documentation searched (classification system followed by classification symbols)

C09D11/322; B41J2/01; B41M5/00

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 2018-90797 A (KAO CORPORATION) 14 June 2018 (2018-06-14) claims, examples, etc. | 1-5 |
| X | JP 2018-104697 A (KAO CORPORATION) 05 July 2018 (2018-07-05) claims, examples, etc. | 1-5 |
| X | JP 2019-73595 A (KAO CORPORATION) 16 May 2019 (2019-05-16) claims, examples, etc. | 1-5 |
| X | JP 7210802 B1 (SAKATA INX CORP.) 23 January 2023 (2023-01-23) claims, example 22, paragraph [0018] | 1-5 |
| X | WO 2020/080121 A1 (DIC CORPORATION) 23 April 2020 (2020-04-23) claims, examples, paragraph [0055] | 1-5 |
| X | JP 2018-80255 A (KAO CORPORATION) 24 May 2018 (2018-05-24) claims, examples, paragraphs [0116], [0014] | 1-5 |

☑ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **05 February 2024** | **27 February 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (July 2022)

**INTERNATIONAL SEARCH REPORT**

International application No.
**PCT/JP2023/046852**

**C. DOCUMENTS CONSIDERED TO BE RELEVANT**

| Category* | Citation of document, with indication, where appropriate, of the relevant passages | Relevant to claim No. |
|---|---|---|
| X | JP 2018-131591 A (KAO CORPORATION) 23 August 2018 (2018-08-23) claims, examples, paragraphs [0105], [0015] | 1-5 |

Form PCT/ISA/210 (second sheet) (July 2022)

**INTERNATIONAL SEARCH REPORT**
**Information on patent family members**

International application No.
**PCT/JP2023/046852**

| Patent document cited in search report | Publication date (day/month/year) | Patent family member(s) | Publication date (day/month/year) |
|---|---|---|---|
| JP 2018-90797 A | 14 June 2018 | US 2019/0315984 A1<br>claims, examples, etc.<br>WO 2018/101441 A1<br>EP 3549984 A1<br>CN 110023415 A | |
| JP 2018-104697 A | 05 July 2018 | US 2019/0352434 A1<br>claims, examples, etc.<br>WO 2018/123902 A1<br>EP 3564328 A1<br>CN 110088213 A | |
| JP 2019-73595 A | 16 May 2019 | (Family: none) | |
| JP 7210802 B1 | 23 January 2023 | (Family: none) | |
| WO 2020/080121 A1 | 23 April 2020 | US 2021/0395546 A1<br>claims, examples<br>EP 3868844 A1<br>CN 112739783 A | |
| JP 2018-80255 A | 24 May 2018 | (Family: none) | |
| JP 2018-131591 A | 23 August 2018 | (Family: none) | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2020180178 A
- JP 2020218287 A
- JP 2019119786 A
- JP 2020050705 A
- JP 2012193268 A
- JP 7210802 B
- JP 2000094825 A
- WO 2005116147 A


### Non-patent literature cited in the description


- **J.A. BRYDSON**. Plastics Materials. Butterworth-Heinemann, 1995